# EUROPÄISCHE PATENTANMELDUNG

(11) **EP 2 020 285 A2**
(43) Veröffentlichungstag der Anmeldung: **04.02.2009**
(21) Anmeldenummer: 08008222.5
(22) Anmeldetag: 30.04.2008
(51) Int. Cl.: B29C 65/08, B29C 65/60

(54) **Bauteilanordnung**

(30) Priorität: 28.07.2007 DE 102007035484
(71) Anmelder: Dr. Ing. h.c. F. Porsche Aktiengesellschaft, 70435 Stuttgart (DE)
(72) Erfinder: Waibel, Thorsten, 74321 Bietigheim-Bissingen (DE)

(57) **Zusammenfassung**

Die Erfindung betrifft eine Bauteilanordnung umfassend zwei Bauteile (1, 2), die miteinander durch plastische Verformung, insbesondere durch Ultraschallschweißen, an Schweißpunkten (3, 4, 5, 6, 7) verbindbar sind, wobei ein Nietdom (12) vom ersten Bauteil absteht und eine Öffnung (20) im zweiten Bauteil (2) durchsetzt, wobei ein die Öffnung (20) umgebender Bereich als Anschlag für eine Schulter (16, 17) des Nietdoms (12) ausgebildet ist. Um eine Bauteilanordnung zu schaffen, deren Schweißpunkte fertigungstechnisch in dem vorgegebenen Toleranzbereich liegen, wird vorgeschlagen, dass der Anschlag als ebene Anschlagfläche (21) ausgebildet ist, die gegenüber der angrenzenden Flächenkontur des zweiten Bauteils (2) zumindest teilweise höhenversetzt ist.

## Beschreibung

Die Erfindung betrifft eine Bauteilanordnung gemäß dem Oberbegriff des Patentanspruchs 1.

Aus dem Stand der Technik ist bekannt, dass zur festigkeitsorientierten Auslegung von Verbindungen, die durch plastische Verformung, insbesondere durch Ultraschallschweißen, entstehen, durch Wahl der Position des Schweißpunktes, die Geometrie des so genannten Nietdoms und die Geometrie der Öffnung entsprechend ausgelegt werden müssen. D.h., je nachdem an welcher Position des Bauteils der Schweißpunkt angeordnet wird, müssen Anpassungen in der Geometrie beider zu verbindender Bauteile vorgenommen werden.

Die DE 10 2005 036 249 A1 zeigt eine Bauteilanordnung, die aus einem Blechteil und einem Kunststoffteil zusammengesetzt ist. Das Blechteil und das Kunststoffteil sind durch plastisches Verformen eines einstückig mit dem Kunststoffteil ausgebildeten Nietdoms zusammengefügt, wobei das Kunststoffmaterial des Kunststoffteils eine Öffnung des Blechteils längs einer Durchsetzungsrichtung durchsetzt und mit einem sich aus der plastischen Verformung sich ergebenden Nietkopf hintergreift. Der die Öffnung umgebende Bereich des Blechteils dient als Anschlag für eine Schulter des Nietdoms.

Beim Fügen wird eine Sonotrode senkrecht auf den Nietdom gesetzt. Durch Einwirkung von Ultraschall wird der Nietdom plastifiziert und hintergreift die nach oben abkragende Öffnungskante des Blechteils.

Sofern die zu fügenden Bauteile komplizierte Oberflächenkonturen aufweisen, kann es beim Fügen zu erheblichen Toleranzabweichungen kommen.

Es besteht daher die Aufgabe der Erfindung darin, eine Bauteilanordnung zu schaffen, deren Schweißpunkte fertigungstechnisch in dem vorgegebenen Toleranzbereich liegen. Diese Aufgabe wird erfindungsgemäß mit den Merkmalen des Patentanspruchs 1 gelöst.

Vorteilhafte Ausgestaltungen ergeben sich aus den Merkmalen der Unteransprüche.

Erfindungsgemäß umfasst die Bauteilanordnung zwei Bauteile, die miteinander durch plastische Verformung, insbesondere durch Ultraschallschweißen, an definierten Schweißpunkten miteinander verbindbar sind. Dabei ist zu berücksichtigen, dass die Materialeigenschaften der beiden Bauteile eine Verschmelzung zulassen. Es ist vorgesehen, dass ein Nietdom vom ersten Bauteil absteht und eine Öffnung im zweiten Bauteil durchsetzt, wobei ein die Öffnung umgebender Bereich als Anschlag für eine Schulter des Nietdoms ausgebildet ist. Für eine reproduzierbare Verbindung ist der Anschlag als ebene Anschlagsfläche ausgebildet, je gegenüber der angrenzenden Flächenkontur des zweiten Bauteils zumindest teilweise höhenversetzt ist. Das hat den Vorteil, dass auch bei unebenen Fügebereichen zumindest im Bereich der Schweißpunkte eine ebene Auflagefläche zur Nietkopfbildung vorhanden ist. Diese ebene Anschlagfläche kann auch als Plateau beschrieben werden, da sie gegenüber den angrenzenden Bereichen eine sichtbar angehobene, also herauskragende Stellung hat.

Vorteilhafterweise kann die ebene Anschlagfläche in einen Dom integriert sein, der insbesondere als Runddom ausgebildet sein kann. Der Durchmesser des Plateaus richtet sich nach den verwendeten Sonotroden. Jedoch sollte sich an jedem Schweißpunkt der Dom auf gleicher Höhe befinden.

Der Runddom kann gegenüber der angrenzenden Flächenkontur erhaben ausgebildet sein. D.h., er steht über die Fläche des zweiten Bauteils über.

Um ausreichend Material für eine Verschmelzung, d.h. für den zu erzielenden Stoffschluss, zur Verfügung zu haben, kann ein Rundkragen die Öffnung begrenzen.

Um die Öffnung mit Material zu verschließen, kann der Nietdom die Öffnung um einen geringen Betrag überragen.

Für die Steifigkeit der Verbindung ist es ausreichend, wenn der Nietdom röhrenförmig ausgebildet ist.

Von dem röhrenförmigen Nietdom kann die Schulter durch Kreuzrippen gebildet werden, die sich umfänglich an den Nietdom anschließen.

Um den Fügeprozess zu vereinfachen, kann der Nietdom am oberen Rand angefast sein.

Vorteilhafterweise sind die Abmaße des Nietdoms passgenau für den Runddom ausgebildet. Damit können die beiden zu fügenden Teile aufeinander gesteckt werden und werden schon vor dem eigentlichen Fügen zusammengehalten.

Es hat sich gezeigt, dass die Abstände zwischen den Schweißpunkten mindestens 60 mm betragen sollte. Dieser Abstand richtet sich hauptsächlich nach den Abmaßen der Schweißeinheit.

Erfindungsgemäß ist das erste Bauteil mit mindestens einem Nietdom ausgestattet, der zum Verbinden mit einem zweiten Bauteil geeignet ist, das eine Öffnung aufweist. Der Nietdom weist eine Schulter auf, die an einem Anschlag anliegt, wobei die Schulter korrespondierend zum Anschlag ausgebildet ist.

Das zweite Bauteil ist erfindungsgemäß mit einer Öffnung, die für einen Nietdom geeignet ist, ausgestattet. Ein die Öffnung umgebender Bereich ist als Anschlag für eine Schulter des Nietdoms ausgebildet, wobei der Anschlag als ebene Anschlagfläche ausgebildet ist, die gegenüber der angrenzenden Flächenkontur des zweiten Bauteils zumindest teilweise höhenversetzt ist.

Weitere vorteilhafte Ausgestaltungen der Erfindung werden im Folgenden anhand der Zeichnungen näher erläutert. Dabei zeigen:
- Fig. 1: eine Draufsicht auf die Rückseite zweier miteinander durch Ultraschallschweißen gefügter Bauteile,
- Fig. 2: eine perspektivische Ansicht eines Schweißpunktes gemäß Fig. 1,
- Fig. 3: eine Schnittdarstellung gemäß Linie III-III in Fig. 2,
- Fig. 4: eine Einzeldarstellung eines Nietdoms in perspektivischer Ansicht,
- Fig. 5: eine Einzelansicht eines Runddoms in perspektivischer Darstellung,
- Fig. 6: ein Runddom an einer unebenen Fläche des zweiten Bauteils in einer Draufsicht,
- Fig. 7: der Runddom gemäß Fig. 6 in einer perspektivischen Ansicht schräg von vorn,
- Fig. 8: eine Seitenansicht eines ersten Bauteils mit einer Vielzahl von Nietdomen,
- Fig. 9: eine Draufsicht auf einen Nietdom gemäß Fig. 8,
- Fig. 10: eine detaillierte Darstellung des Nietdoms in einer Ansicht schräg von vorne gemäß Fig. 9 sowie
- Fig. 11: einen Schnitt gemäß Linie XI-XI in Fig. 1 durch einen Schweißpunkt.

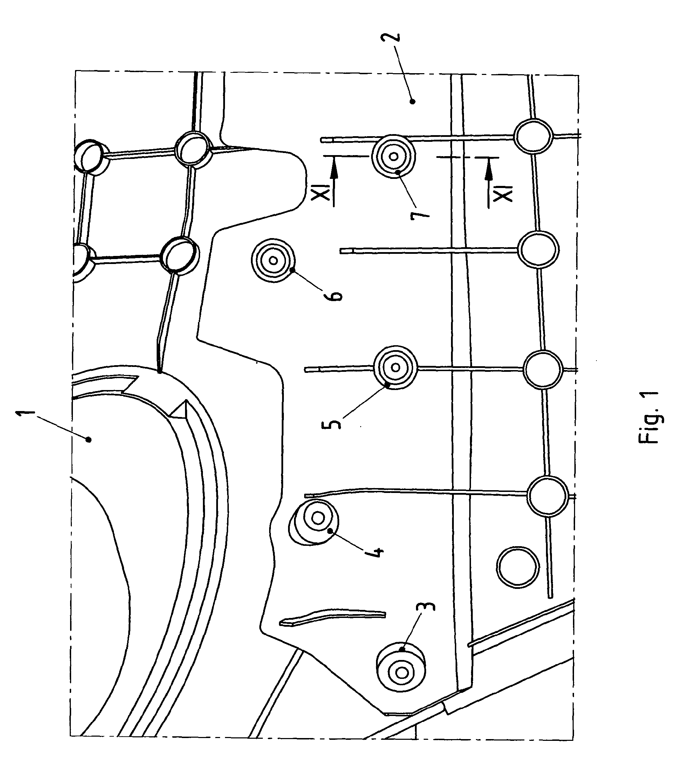

Fig. 1 zeigt ein erstes Bauteil 1 und ein zweites Bauteil 2, die miteinander an Schweißpunkten 3, 4, 5, 6 und 7 miteinander verbunden sind. Bei den beiden Bauteilen 1 und 2 handelt es sich in diesem Ausführungsbeispiel um eine Frontseitenverkleidung, wobei das für die Erfindung nicht wesentlich ist. Das Bauteil 2 ist im Übergangsbereich zum Bauteil 1 nach oben abgebogen und folgt damit der Kontur des Bauteils 1.

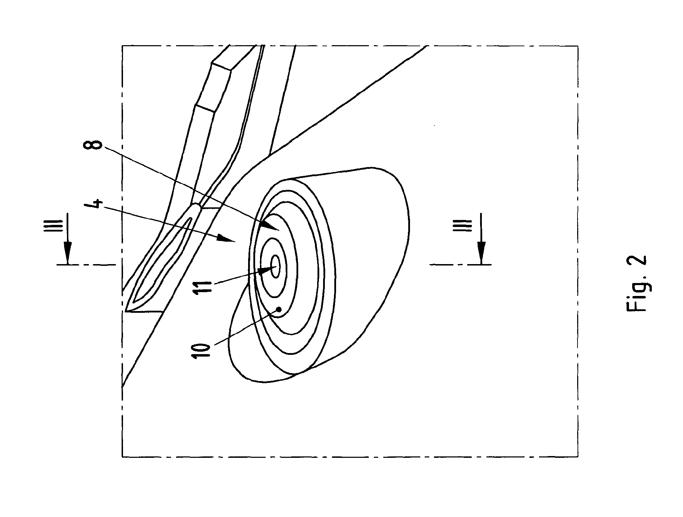

In Fig. 2 ist der Schweißpunkt 4 näher zu erkennen. Es ist zu sehen, dass der Schweißpunkt mit seinem Nietkopf 8 erhaben über die Fläche des Bauteils 2 ist. Der Nietkopf 8 kommt durch Einwirkung von Ultraschallschwingungen zustande, die von einer - hier nicht dargestellten - Sonotrode erzeugt werden. Die Form einer derartigen Sonotrode geht beispielsweise aus der DE 100 46 451 A1 hervor. Durch die Plastifizierung beim Ultraschallschweißen und die Form der Sonotrode ergibt sich beim Nietkopf 8 eine Wulst 10, die in der Mitte eine Vertiefung 11 aufweist.

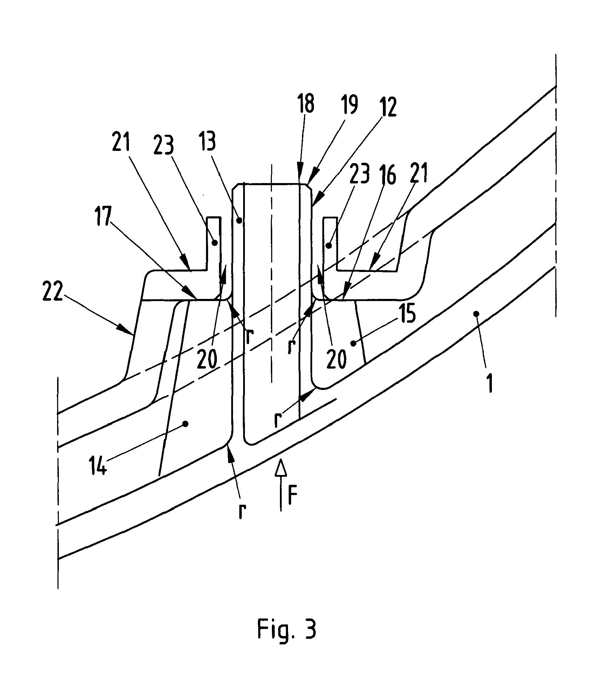

Anhand von Fig. 3 wird der Aufbau der beiden Teile im unverschweißten Zustand näher dargestellt.

Vom ersten Bauteil 1 steht ein Nietdom 12 ab, der röhrenförmig ausgebildet ist. Der Nietdom 12 ist dabei unabhängig vom Verlauf des ersten Bauteils 1 senkrecht angeordnet. Von der Röhre 13 stehen Kreuzrippen 14, 15 ab. Die Kreuzrippen 14, 15 sind mit einer Schulter 16, 17 ausgestattet, die zur Anlage am zweiten Bauteil 2 dienen. Die Anbindung des Nietdoms 12 sowohl an die Kreuzrippen 14 und 15 als auch an das Bauteil 1 selbst sind mit einem Radius r versehen, um Kerbwirkungen beim Aufsetzen der Vorschubeinheiten des Ultraschallgeräts entgegenzuwirken. An der oberen Abschlusskante 18 des Nietdoms ist eine Phase 19 vorgesehen, die das Einführen des Nietdoms in die Öffnung des zweiten Bauteils erleichtert.

Das zweite Bauteil 2 weist eine geometrisch konkave Oberfläche auf, deren regelmäßiger Verlauf mit einer gestrichelten Linie dargestellt ist und eigentlich parallel zur Kontur des Bauteils 1 verlaufen würde. Erfindungsgemäß ist vorgesehen, dass der die Öffnung umgebenden Bereich 21 als Plateau, d.h. als ebene Anschlagfläche für die Schulter 16, 17 des Nietdoms 12 ausgebildet ist. Beim Einführen des Nietdoms in Richtung F wird das Bauteil 1 so lange verschoben, bis die Schultern 16, 17 an der Unterseite der ebenen Anschlagfläche 21 anliegen. Die Anschlagfläche bzw. das Plateau 21 sind in einen Dom 22 integriert, der je nach Flächenverlauf des Bauteils 2 mehr oder weniger erhaben angeordnet ist. Der Aufbau des Runddoms 22 ist geometrisch an allen Schweißpunkten gleich, was eine Reproduzierbarkeit der Ultraschallverbindungen verbessert. Von der Öffnungskante der Öffnung 20 steht ein Rundkragen 23 ab, wobei im gefügten, aber unverschweißten Zustand, die obere Abschlusskante des Nietdoms 12 den Rundkragen 23 überragt.

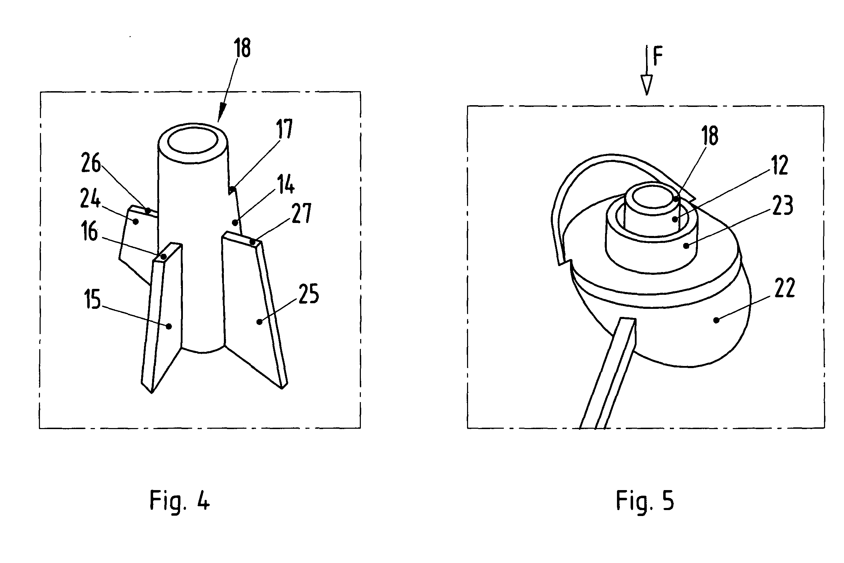

Der Nietdom wird verdeutlicht in Fig. 4, wonach diametral zu den Kreuzrippen 14 und 15 zwei weitere Kreuzrippen 24 und 25 vorgesehen sind. Der Abstand von der Schulter 16, 17, 26, 27 zur oberen Abschlusskante 18 richtet sich nach dem Material, das plastifiziert werden soll. Es kann vorgesehen sein, dass zusätzlich eine Verrastung, zumindest an einigen der Schweißpunkte, vorgesehen ist, um beim Aufeinanderstecken der beiden Teile zumindest eine gewisse Verbindung sicherzustellen, um das Hantieren mit beiden Teilen zu erleichtern.

Fig. 5 zeigt in einer Detailansicht den Runddom 22 mit eingestecktem Nietdom 12. Es ist besonders gut zu erkennen, dass die obere Abschlusskante 18 des Nietdoms 12 über den Rundkragen 23 des Runddoms 22 hinausragt. Die Sonotrode kommt aus Pfeilrichtung F, um Nietdom 12 und Runddom 22 miteinander plastisch zu verformen.

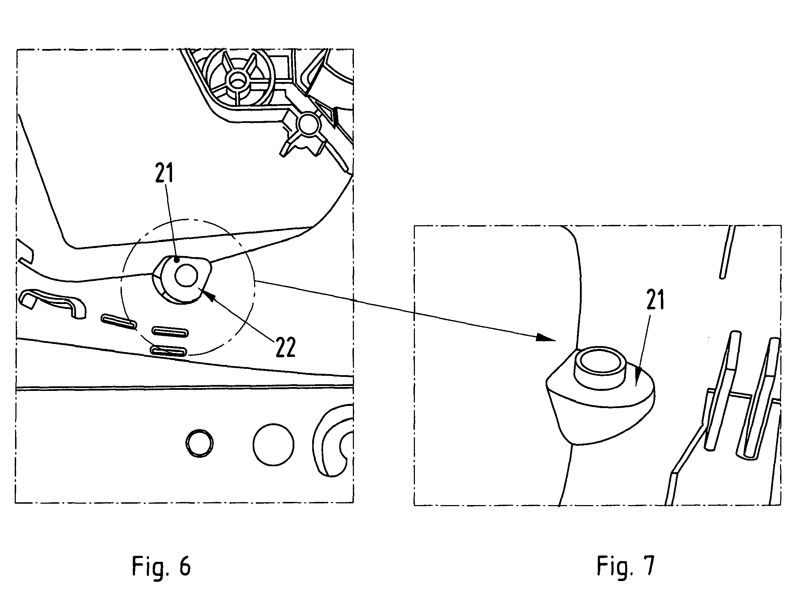

Gemäß den Fig. 6 und 7 geht ein Runddom hervor, der an einer zerklüfteten und damit besonders schlecht zugänglichen Stelle des ersten Bauteils angeordnet ist. Es ist sehr gut zu erkennen, dass durch den Runddom 22 eine ebene Anschlagfläche 21 für die Sonotrode des Ultraschallschweißgeräts geschaffen ist.

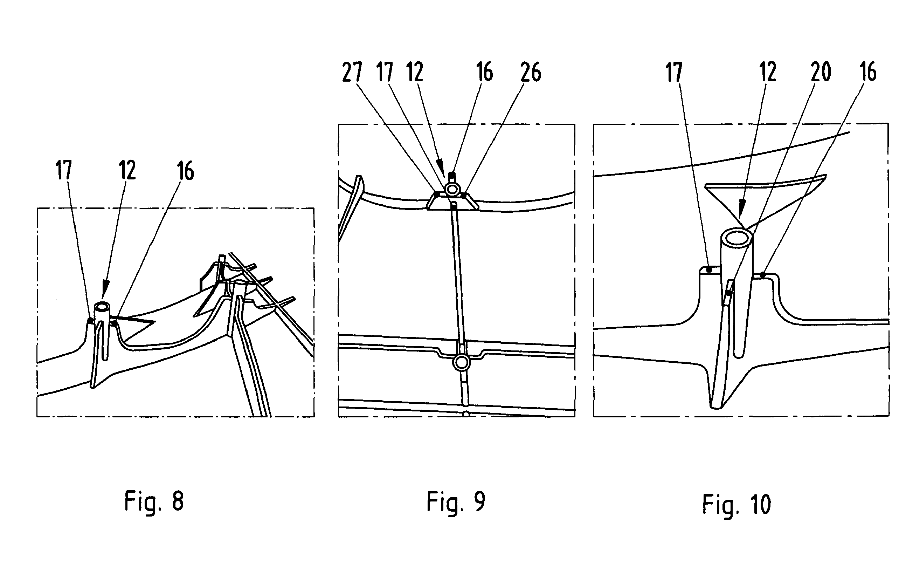

In den Darstellungen gemäß Fig. 8, 9 und 10 ist eine Vielzahl von Nietdomen 12 gut zu erkennen. Die Schultern 16, 17, 26, 27 der Kreuzrippen der in einer Reihe angeordneten Nietdome enden alle auf gleicher Höhe, um prozesssicher und montagegerecht die Einzelteile zu fügen.

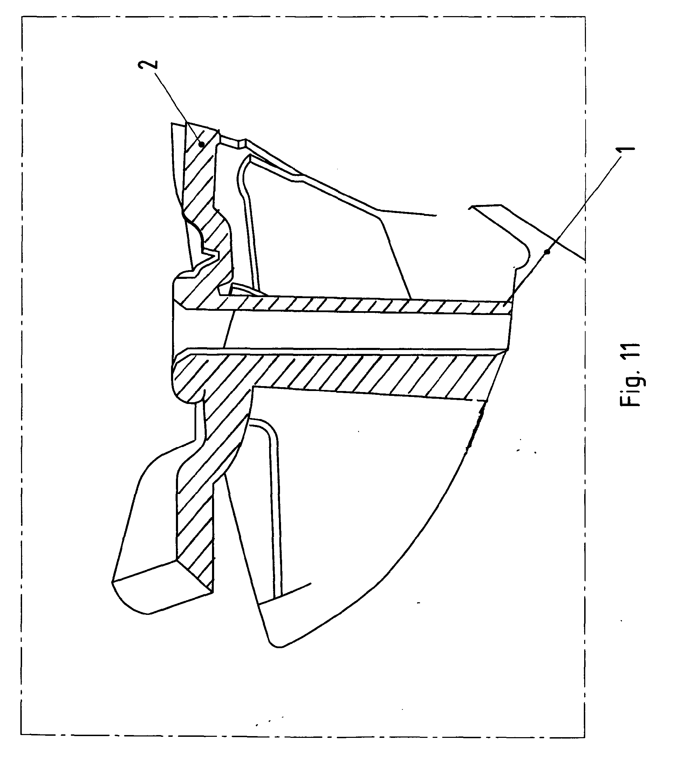

Aus Fig. 11 geht ein Schweißpunkt in fertig gefügter Form hervor. Es ist zu erkennen, dass die beiden Bauteile im Stoffschluss miteinander stehen. Da gleiche Materialen des Bauteils 1 und Bauteil 2 verwendet wurden, lassen sich im gefügten Zustand die Bauteile 1 und 2 nicht mehr voneinander unterscheiden. Es sind keine Übergangskanten zu erkennen.

Mit der oben beschriebenen Gestaltung des Nietdoms und des Runddoms sind Schweißverbindungen geschaffen, die fertigungstechnisch wie auch geräuschmäßig ein sehr gutes Niveau haben. Die Runddome sollten an allen Schweißpunkten gleich ausgeführt sein. Zur Verbesserung der Schweißverbindung der beiden Bauteile ist, wie oben beschrieben, an der Öffnung ein Rundkragen vorgesehen, der eine Verbesserung hinsichtlich der Qualität aufgrund direkter Verschmelzung der beiden Bauteile gegenüber einer reinen Nietkopfbildung bewirkt. Sollten sich die Materialien der zu verschweißenden Bauteile nicht entsprechen, ist gegebenenfalls der Rundkragen nicht auszuführen. Die Nietdome sind in der Anbindung zum Träger mit einem Radius auszuführen, um eine bessere Anbindung an den Träger zu gewährleisten und um Kerbwirkungen beim Aufsetzen der Vorschubeinheiten und der Sonotroden zu verhindern. Am oberen Schweißdomende sind Phasen auszuführen, um eine bessere Plastifizierung zu erreichen, da dadurch weniger Schmelzmasse ein schnelleres Anschmelzen und eine gleichmäßigere Wärmeeinleitung bewirken.

Mindestens zwei Runddome pro Bauteil sollten zur prozesssicheren und montagegerechten Fügbarkeit um einen gewissen Betrag, beispielsweise um 2 mm, höher sein als die anderen Runddome. Idealerweise sind die beiden größeren Runddome zwei gegenüberliegende Schweißpunkte. Damit die Teile nach dem Fügen, was teilweise außerhalb der Anlage erfolgt, beim Einlegen in die Anlage nicht wieder auseinander fallen, sind die Runddome zusätzlich auf Passung zu verrippen oder über separate Rastpunkte haltbar zu fügen. Unabhängig davon sollte eine Bewegung, beispielsweise eine Drehung der Bauteile, möglich sein, ohne dass die beiden Bauteile wieder auseinander fallen.

Mit der erfindungsgemäßen Lösung ist für jeden Schweißpunkt eine ebene Auflagefläche, nämlich ein Plateau, zur Nietkopfbildung vorgesehen. Es hat sich gezeigt, dass ein Durchmesser von ca. 16 mm besonders wirksam ist. Unabhängig von der Gestaltung des Bauteils können so für die Sonotroden und die Vorschubeinheiten ebene Auflageflächen zur Verfügung gestellt werden.

Da zur prozesssicheren Verschweißung die Bauteile während des Schweißprozesses über Niederhalter miteinander verpresst werden, können dazu in der Nähe der Schweißpunkte weitere geeignete ebene Flächen vorgesehen werden. Idealerweise sind die Flächen zwischen den Schweißdomen auf demselben Niveau weiterzuführen. Darüber hinaus müssen alle Schweißpunkte über eine separate Vorschubeinheit zur Qualitätssicherung des Schweißpunktes und seiner Einstellmöglichkeit schweißbar sein. Daher empfiehlt sich ein Abstand der Schweißpunkte von mindestens 60 mm bis 65 mm.

## Patentansprüche

1. Bauteileanordnung umfassend zwei Bauteile (1, 2), die miteinander durch plastische Verformung, insbesondere durch Ultraschallschweißen, an Schweißpunkten (3, 4, 5, 6, 7) verbindbar sind, wobei ein Nietdom (12) vom ersten Bauteil (1) absteht und eine Öffnung (20) im zweiten Bauteil (2) durchsetzt, wobei ein die Öffnung (20) umgebender Bereich als Anschlag für eine Schulter (16, 17) des Nietdoms (12) ausgebildet ist,
**dadurch gekennzeichnet,**
**dass** der Anschlag als ebene Anschlagfläche (21) ausgebildet ist, die gegenüber der angrenzenden Flächenkontur des zweiten Bauteils (2) zumindest teilweise höhenversetzt ist.

2. Bauteilanordnung nach Anspruch 1,
**dadurch gekennzeichnet,**
**dass** die ebene Anschlagfläche (21) in einen Dom, insbesondere in einen Runddom (22) integriert ist.

3. Bauteilanordnung nach Anspruch 2,
**dadurch gekennzeichnet,**
**dass** der Dom, insbesondere der Runddom (22), gegenüber der Flächenkontur erhaben ausgebildet ist.

4. Bauteilanordnung nach einem der vorgenannten Ansprüche,
**dadurch gekennzeichnet,**
**dass** die Öffnung (20) einen Rundkragen (23) aufweist.

5. Bauteilanordnung nach Anspruch 4,
**dadurch gekennzeichnet,**
**dass** der Nietdom (12) den Rundkragen (23) überragt.

6. Bauteilanordnung nach einem der vorgenannten Ansprüche,
**dadurch gekennzeichnet,**
**dass** der Nietdom (12) röhrenförmig ausgebildet ist.

7. Bauteilanordnung nach Anspruch 6,
**dadurch gekennzeichnet,**
**dass** die Schulter des Nietdoms (12) als Kreuzrippe (14, 15) ausgebildet ist.

8. Bauteilanordnung nach einem der vorgenannten Ansprüche,
**dadurch gekennzeichnet,**
**dass** der Nietdom (12) an seinem oberen Rand (18) angefast ist und eine Phase (19) aufweist.

9. Bauteilanordnung nach einem der vorgenannten Ansprüche,
**dadurch gekennzeichnet,**
**dass** der Nietdom (12) in den Runddom (22) eingepasst ist.

10. Bauteilanordnung nach einem der vorgenannten Ansprüche,
**dadurch gekennzeichnet,**
**dass** der Abstand zwischen zwei Schweißpunkten (3, 4, 5, 6, 7) mindestens den Abmaßen der Sonotrode bzw. der Vorschubeinheit entspricht.

11. Erstes Bauteil (1) für eine Bauteilanordnung mit mindestens einem Nietdom (12), geeignet zum Verbinden mit einem zweiten Bauteil (2), das eine Öffnung (20) aufweist, wobei der Nietdom (12) eine Schulter (16, 17) aufweist, die an einem Anschlag anliegt,
**dadurch gekennzeichnet,**
**dass** die Schulter (16, 17) korrespondierend zum Anschlag ausgebildet ist, wobei der Anschlag als ebene Anschlagfläche (21) ausgebildet ist, die gegenüber der angrenzenden Flächenkontur des zweiten Bauteils (2) zumindest teilweise höhenversetzt ist.

12. Zweites Bauteil für eine Bauteilanordnung mit einer Öffnung, die für einen Nietdom geeignet ist, wobei ein die Öffnung umgebender Bereich als Anschlag für eine Schulter (16, 17) des Nietdoms (12) ausgebildet ist, wobei der Anschlag als ebene Anschlagfläche (21) ausgebildet ist, die gegenüber der angrenzenden Flächenkontur des zweiten Bauteils (2) zumindest teilweise höhenversetzt ist.
